# EUROPEAN PATENT SPECIFICATION

(11) **EP 2 274 342 B1**
(45) Date of publication and mention of the grant of the patent: **27.04.2016**
(21) Application number: 09717475.9
(22) Date of filing: 04.03.2009
(51) Int. Cl.: C08F 10/02, B32B 27/32, C08J 5/18, C08F 210/16, C08L 23/06, C08L 23/08

(54) **HIGH MIR LINEAR POLYETHYLENES AND COEXTRUDED FILMS MADE USING SUCH POLYETHYLENE**
LINEARE POLYETHYLENE MIT HOHEM MIR UND UNTER VERWENDUNG VON DERARTIGEM POLYETHYLEN HERGESTELLTE COEXTRUDIERTE FOLIEN
POLYÉTHYLÈNES LINÉAIRES À MIR ÉLEVÉ ET FILMS COEXTRUDÉS FABRIQUÉS À PARTIR D UN TEL POLYÉTHYLÈNE

(30) Priority: 07.03.2008 GB 0804290
(43) Date of publication of application: 19.01.2011
(73) Proprietor: ExxonMobil Chemical Patents Inc., Baytown, TX 77520 (US)
(72) Inventor: VINCK, Michael, B-9280 Lebbeke (BE)
(74) Representative: Mareschal, Anne
(86) International application number: PCT/EP2009/001524
(87) International publication number: WO 2009/109367

(56) References cited:
- WO-A-01/94113
- WO-A-2007/140854

## Description

### FIELD OF INVENTION

The invention relates to linear low density polyethylene with selected density and MI and to coextruded films, especially those made by blown film coextrusion processes, using such polyethylene materials. The coextruded films may be used to produce packages. The films have an improved balance of optical and mechanical properties and processability. In describing the compositions in the description and claims all percentages by weight are based on the total weight of polymer in the compositions, excluding any other non-polymeric additives, unless otherwise mentioned.

### BACKGROUND OF INVENTION-POLYMERS USED

The films of the invention uses a combination of different polymers. References to "polymers" herein are references to the direct product of a particular polymerization process polymer that has been subjected to a post-polymerization process, which generally yields the polymer in pelletized form. Within each polymer there are fluctuations a) between the constituent polymer chains in the molecular weight that give rise to a molecular weight distribution; b) in content of comonomer between the chains giving rise to a composition distribution and c) distribution of comonomers within the chains giving rise to sequence distributions. References to "polymer compositions" are to composition containing polymer blended with each other and/or additives. For clarity, the polymers used for the different layers in the coextruded films of the invention and the polymers that are mechanically blended to form a composition for use in combination for a particular layer are defined and distinguished in the description and claims in the manner described below.

The "HPPE" (high pressure polyethylene) is the product of free-radical initiated polymerization and comprises at least 85 mol% of units derived from ethylene. The resulting polymer is generally described as having a non-linear structure and being heterogeneously branched. The heterogeneous branching in HPPE is presumed to result from the incorporation of short chain and long chain branches of varying size and branch structures. HPPE is polymerized using free radical initiators and these cause the irregular incorporation of branches of varying length and structure into a main chain by what is usually described as a "back-biting" mechanism. It is believed that such long chain branches, generally branches containing more than 6 carbon atoms that are not easily differentiated by C¹³ NMR, are multiply branched ("hyper-branched") i.e., that are dendritic and contain branches within the long chain branches themselves. Such polymers are highly non-linear. The C¹³ NMR spectrum of the HPPE, shows a statistically probable distribution of shorter branches containing 6 carbon atoms or less and is different from that of linear polyethylenes where the NMR peaks of the shorter branches result from the short chain branches formed by comonomer incorporation.

HPPE includes (A) low density polyethylene (LDPE) which is defined herein as containing less than 7.5 mol% of units derived from comonomers containing polar moieties such a carbonyl groups, including ethylenically unsaturated esters, e.g. vinyl acetate, ethylene methyl acrylate, ethylene methacrylic acid or ethylene acrylic acid and (B) heterogeneously branched ethylene vinyl acetate containing more than 7.5 mol% of such comonomer having polar moieties.

Linear polyethylenes are the product of catalytic polymerization and comprises at least 65 mol % of ethylene derived units and a balance of units derived from an alpha-olefin comonomer having from 3 to 12 carbon atoms. The presence of the short chain branches derived from comonomer incorporation gives rise to well defined peaks in a C¹³ NMR spectrum at the location appropriate for that comonomer or comonomers and an absence of peaks at locations indicating other short chain branching. Catalytic polymerization promotes a relatively narrow molecular weight distribution which is generally less than 5 when expressed as an Mw/Mn value determined by GPC. Linear polyethylenes may be available in different densities and include, as defined herein in the description and claims, very low density polyethylene (VLDPE) having a density of less than 0.91 g/cm³, linear low density polyethylene (LLDPE) having a density of from 0.91 up to 0.94 g/cm³ and high density polyethylene (HDPE) having a density of above 0.94 g/cm³.

The polymers described as linear polyethylenes above may be made using different catalyst systems. The prefix "zn" is used in the specification and claims as in "znPE", "znLLDPE" etc. to indicate that a conventional Ziegler-Natta type catalyst system was used, generally with a titanium compound as the transition metal component and an aluminum alkyl as cocatalyst. Such catalysts are generally regarded as multi-sited and provide active sites with different activity levels. "mPE, "mLLDPE" etc. indicate that the transition metal component-used was a single site catalyst, which generally refers to a transition metal component such as a metallocene activated by methods well known for such components, such as alumoxane or a non-coordinating anion. For the sake of convenience, polyethylenes made using single sited catalysts other than metallocene are also indicated using the "m" prefix. The different catalysts influence the molecular weight distribution, the composition distribution, the sequence distribution and chain termination moieties, which together with an analysis of catalyst residue readily permit a person skilled in the art to distinguish the mPE and znPE types.

"zn" linear polyethylene types tend to have a greater heterogeneity in terms of molecular weight distribution and composition distribution as compared to "m" linear polyethylene types due to the multi-sited nature of the catalyst. The heterogeneity may be determined by suitable fractionation techniques appropriate to the density concerned, such as a measurement of the molecular weight distribution by GPC, the compositional distribution by a temperature rising elution fractionation ("TREF") measurement or a Crystaf measurement. As used herein in the description and claims "zn" linear polyethylene types refer to polyethylenes, analyzable by elution fractionation, having a T₇₅-T₂₅ determined as described herein of at least 20 °C, optionally together with low T₂₅ typically less than 70 °C indicative of the presence of a significant level of easily eluted low molecular weight, high comonomer polymer fraction. At low densities other fractionation techniques can be used to distinguish "zn" and "m" types of linear polyethylene. The znPE polymers described above are well know in the art and may be made by conventional polymerization techniques.

A "low MIR linear polyethylene" polymer is a linear polyethylene with a shear sensitivity expressed as an I_{21.6} / I_{2.16} ratio (MIR) as determined by ASTM-1238 Condition 2.16 kg and 21.6 kg, at 190°C of less than 30. The low MIR linear polyethylenes may be of the znPE and mPE types. The low MIR indicates no or a low level of long chain branches as well as a narrow molecular weight distribution which may be expressed as an Mw/Mn value determined by GPC. The C¹³ NMR spectrum characteristics are shared with those of the linear polyethylenes generally mentioned previously because any long chain branching is at too low a level to influence the C¹³ NMR spectrum.

A "high MIR linear polyethylene" polymer has an MIR of more than 30 which in combination with a relatively low Mw/Mn value is generally accepted to be indicative of the presence of long chain branching. For this reason and because the long chain branching are presumed to have a homogeneous structure themselves, these polymers may be referred to as "homogeneously branched linear polyethylenes". For a given polymer with a high MIR, the lower the Mw/Mn the greater the contribution of long chain branching that can be inferred to contribute to the high MIR. Polymers with an Mw/Mn of 4.5 or less and an MIR of 35 or higher generally can be presumed to have a significant level of long chain branching. These polymers may hence be referred to as long chain branched linear polyethylene. The long chain branching is understood to be the result of the incorporation of terminally unsaturated polymer chains (formed by the specific termination reaction mechanism encountered with single site catalysts) into other polymer chains in a manner analogous to monomer incorporation. The branches are hence believed to be linear in structure and may be present at a (low) level where no peaks can be specifically attributed to such long chain branches in the C¹³ NMR spectrum. The range of high MIR linear polyethylene, in terms of density and/or molecular weight etc., may be less than that of non-branched linear polyethylenes as a result of constraints in the polymerization process.

High MIR linear polyethylenes have been developed more recently. At the lower density end such as VLDPE, they may be produced using catalysts and processes in solution as described in WO1993/008221 or for a higher band of densities in gas phase such as LLDPE as described in WO98/44011 US6255426, which describes polymers of ethylene and at least one alpha-olefin having at least five carbon atoms obtained by a continuous gas phase polymerization process using supported catalyst of an activated molecularly discreet catalyst such as a metallocene. Page 3, line 25 onwards of WO1998/44011 lists the general properties as a density is from 0.915 to 0.927 g/cm³, an MI from 0.3 to 10 and a CDBI (a TREF based test) of at least 75 % and an Mw/Mn by GPC from 2.5 to 5.5. The density and MI are not interrelated except in Table 2A which yields:

| | Run 1 | Run 2 |
|---|---|---|
| Density | 0.9190 | 0.9257 |
| MI | 1.10 | 0.62 |
| MIR | 46.0 | 57.6 |
| Mw/Mn | 5.04 | 5.85 |
| CDBI | 86 | 83.10 |
| Mol % hexene-1 | 3.3 | 2.2 |

The Mw/Mn value indicate a moderately broad molecular weight distribution which contributes partly to the MIR values. However the high MIR values are presumed to be due in part to the presence of long chain branches.

The "stiffness modifying or strength enhancing linear polyolefin" referred to in the description and claims maybe a linear polyethylene, including a high MIR linear polyethylene, low MIR linear polyethylene as referred to above as well as linear polymers based on other olefins which are the product of catalytic polymerization, such as polypropylene homopolymer, random propylene copolymer (RCP) as well as propylene based elastomers (PBE), including those described in WO1999/07788 and WO2003/040201 having varying degrees of randomness or blockiness. This polymer can modify the stiffness by having crystallinity and being present in a sufficient amount to change the overall crystallinity from that provided by other polymers used for the films produced. The polymer can be strength enhancing by control of crystallinity, the molecular weight and the molecular weight distribution.

### BACKGROUND OF INVENTION-COEXTRUDED FILMS

Film producers have to balance A) the processability which determines the maximum achievable output per film extrusion machine in order to reduce manufacturing costs; B) the mechanical strength such as the impact strength to make stronger films for a given thickness and reduce the overall consumption of polymer for a given performance; C) the optical properties such as haze that determine the attractiveness of the packaging and visual inspection of the goods at the point of sale.

Polymers adapted for high production rates are frequently also those that are defensive in terms of their impact strength or the transparency. An advantageous balance has been obtained using core layers of a non-branched, low MIR LLDPE having a narrow Mw/Mn, such as a Dowlex grade produced by Dow Chemical blended with at least 20wt% of LDPE. While clear strong films can be obtained at commercially attractive rates in this way, the LDPE does deteriorate the potential properties available from the LLDPE to a significant extent.

An improved balance of properties has been sought in various ways for various types of blown extruded films, see: US4518654; US5922441A; US2004/0048019; US2006/0188678; WO2004/011456. Multilayer film disclosures using znLLDPE in the skin layers include Example 23 in EP1529633 published 11 May 2005 which discloses a multi-layer blown coextruded film having a core layer comprising 80 wt% Escorene LD514BA and 20 wt% of an HDPE and two skin layers in contact with the core layer of 95 wt% of an mLLDPE and 5 wt% of the LD514BA. The MI of the LDPE is not indicated. Its replacement by the HDPE is said to lead to reduction in haze. WO2005/014762 has examples showing skin layers of mLLDPE and a core layer of heterogeneously branched EVA containing less than 2.3 mol% of units derived from vinyl acetate (see Table 1). WO2004/022646 shows shrink films including multilayer films (see [0010] and [0095]) with Examples 18-21 showing blown coextruded multi-layer films using core and skin layer of the same composition with an LDPE-D having an MI of from 0.75 and a density of 0.923 (See Table 5), blended Resin B and C being mLLDPE's. US5248547 and related cases US5261536 and US5431284 disclose a three layer film with an LDPE core having a melt index of 1 to 25 in the broadest range and linear PE skin layers in the form of znLLDPE having a melt index range of from 1 to 10. US6521338 uses a cling layer using a homogeneously branched linear polyethylene and an LDPE core layer in an A/B multi-layer structure. US6482532 shows a multi-layer film with homogeneously branched low density linear polyethylene skin layers having a density of 0.902 and a melt index of 3.0 g/10 min and a core layer of an LDPE having an MI of 5.0 g/10 min.

US6368545 seeks to improve the clarity of blown coextruded films wherein the melt extrusion temperature and/or the density of a core layer is higher than the equivalent for the skin layer or layers. US6368545 discloses techniques to achieve higher clarity in multilayer blown coextruded films. The core layer may be extruded at a higher temperature than the skin layer or layers and/or the core layer has a higher density than the skin layer or layers. The skin layers are formed from a composition consisting of single znLLDPE or mLLDPE-polymer. The core layer may be formed of an LLDPE, optionally admixed with an HDPE or from blends with varying amounts of an LDPE (LD157 CW having an MI of 0.6 and a density of 0.932 g/cm³) and an mLLDPE. Column 8 lines 42-48 discusses the benefit of using grades with higher shear sensitivity for the core layer so as to increase the melt strength to sustain the bubble formed after extrusion by the molten extrudate.

WO2006021081A discusses blown film extrusion processes and various factors influencing the process outcome stating that "the use of a small amount of HPLD which has a high molecular weight has been observed to allow large production increases when producing film from homogeneously catalyzed lldpe".

Yet other patent publications describe the use of high MIR, presumed branched, linear polymers for films. WO2004/022646 describes heat shrinkable monolayer and multilayer films having good optical and mechanical properties. The films are formed of a blend of a polyethylene copolymer and a second polymer, such as a low density polyethylene. In particular, monolayer and multilayer shrink films are described that include in at least one layer a metallocene-catalyzed polyethylene resin. Also described are articles wrapped with such films. WO2004/022646 describes the properties of the LLDPE in general as having (a) a composition distribution breadth index ("CDBI") of at least 70%; (b) an MI of from a lower limit of 0.1 15 g/10 min; (c) a density of from a lower limit of 0.910 to 0.940 (d) an MIR of 30 to 80 and (e) an Mw/Mn ratio of from a lower limit of 2.5 to 5.5. Again the density and MI are not interrelated. The LLDPE examples are those of WO98/44011.

WO2004/022634 describes stretch films having at least one layer formed of or including a polyethylene copolymer having a draw ratio of at least 250%, a tensile stress at the natural draw ratio of at least 22 MPa and a tensile stress at second yield of at least 12 MPa. It is not apparent that any reference film as defined herein made from the polymers in WO2004/022634 would have an elevated MD Tensile force based on ASTM at 100% elongation. WO2007/140854 describes processes for multi-layer films using combinations of a linear polyethylene in the skin layers and core layers comprising a blend of a LDPE and a linear polyethylene to achieve high clarity.

A combination of LDPE with a branched linear polyethylene for the core layer combined with linear polyethylene in skin layers is described in WO2007/141036 (Vinck, Ohlsson) where process conditions are adjusted to optimize the optical appearance. However the limited amounts of LDPE still appear to have a disproportionate effect on the physical properties. The homogeneously branched polymers used therein have the following properties:

| | MI | Density | Mw/Mn | MIR |
|---|---|---|---|---|
| 20H10AX | 1 | 0.920 | 3.3 | 40 |
| 27H07AX | 0.5 | 0.927 | n/a | 48 |
| EXP502 | 0.5 | 0.920 | 3.2 | 45 |

The balance of mechanical and optical properties on the one hand and the processing properties on the other hand obtainable using LDPE in blends continues to have a negative effect. The various expedients to optimize this balance continue to restrict the range of film stiffness's that can be obtained and continue to favor inclusion of LDPE so limiting the opportunity for inclusion of and benefit provided by incorporating higher amounts of the mPE's to give multi-layer structures with superior mechanical performance. It is among the objects of the invention to minimize the use of LDPE while providing an improved balance of processing, optical and mechanical properties and especially an improved transparency for LLDPE based films.

### SUMMARY OF INVENTION

The linear polyethylenes of the invention are selected to be useful in the formation of coextruded blown film. The characteristics of the polymers combine narrow density and molecular weight ranges with a stress elongation behavior indicative of a polymer branching structure that assists in creating low haze films. The use of HPPE type polymers which tend to have a negative influence on the final physical properties of films made from the polymers can be minimized or eliminated.

Accordingly in a first aspect the invention provides a linear low density polyethylene having a density of 0.91 to 0.94 g/cm³ determined according to ASTM D4703/D1505, an I_{2.16} (MI) of from 0.05 to 1 g/10 min, and I_{21.6} / I_{2.16} (MIR) of more than 35, the MI and MIR being determined according to ASTM 1238 D at 190 °C, and a difference between the MD Tensile force (stress) based on ASTM D882-02 at 100% elongation and MD 10 % offset yield of a reference film as defined herein having a thickness of 25 µm of at least 15MPa. The MI is relatively low; lower MI levels may be preferred, especially towards the low end of the density range. The high MIR excludes narrow molecular weight distribution linear polyethylenes having no long chain branching and hence low shear sensitivity. Preferably that difference may be at least 18 MPa, more preferably at least 20 MPa. The I_{21.6} / I_{21.6} (MIR) is preferably from 40 to 70, more preferably from 45 to 70, and the Mw/Mn as described herein from 2.5 to 4, indicative of the presence of significant levels of long chain branching.

The difference between the MD Tensile force based on ASTM D882-02 at 100% elongation and MD 10 % Offset yield of a reference film may be below a maximum of 50, preferably below 40 MPa. The difference between the tensile force and the offset yield reflects the impact of the long chain branching for selected polymers in that narrow density and MI range as will be further evident from the comparative examples. Advantageously the linear polyethylene of the invention has an MD 10 % Offset yield of at least 14 MPa. A heterogeneously branched HPPE polymer would not be capable of blown film extrusion to provide a reference film of that 25 µm thickness from a 2.5 mm die gap. Without a film a stress-elongation measurement of a reference film is not possible. Polymers that are not capable of being extruded under the conditions specified for the reference film are by definition excluded from the invention.

The high MIR linear polyethylenes of the invention can be readily distinguished by a person skilled in the art from heterogeneously branched polyethylene materials using a variety of known criteria even though both types possess long chain branching and the nature of the branching can generally only be inferred in the well-known manner described in the previous Background of the invention. The heterogeneously branched chain will have a variety of short chain branches whose incidence can be measured and correspond to the random polymerization propagation event occurring during free radical polymerization. Linear polyethylene, whether branched or unbranched, will contain small amounts of catalyst residue absent from heterogeneously branched polyethylenes.

Preferably the density (p) and MI conform to the inequality p > 0.04MI+0.91. Advantageously the MI is from 0.1 to 0.35 g/10 min towards the lower end of the range in combination with a density of from 0.92 to 0.935 or 0.94 g/cm³ towards the upper end of the range. In the absence of special measures, such as the use of series reactors or mixed catalyst systems, the molecular weight distribution tends to be narrow and preferably Mw/Mn as described herein is from 2 to 4, especially from 3 to 4. Single site catalysts are efficient at producing terminally unsaturated chain available for incorporation into the chain backbone and are especially useful for making the polymers of the invention. Again in the absence of special measures, this tends to reflect in a homogenously composition distribution. Preferably the composition distribution as indicated by a T₇₅-T₂₅ value as described herein determined by TREF is from 2 to 8°C. Best overall properties may be achieved using 1-hexene or 1-octene as the comonomer resulting in the formation of short chain branches of 4 respectively 6 carbon atoms. The polyethylene may be produced by processes which yield the polymer in pelletized form ready for blending prior to extrusion with other polymer components.

In a second aspect of the invention, the high MIR linear low density polyethylenes of the invention are used in a core layer of a multi-layer film, obtainable by blown film extrusion, optionally in combination with other polymers, with the skin layers being formed of polymers that are not or minimally branched polymer materials.

Accordingly the invention also provides a coextruded film having:
a) a core layer comprising at least 10 wt% of a linear polyethylene of the invention and no or less than 30, preferably less than 15 wt% of an HPPE, said wt % being calculated on the total polymer wt% in the core layer; and
b) skin layer(s) on at least one side of the core layer comprising (i) at least 85 wt% of a linear polyethylene based on the total weight of polymer in the skin layer of which at least 75 wt% based on the total weight of linear polyethylene in the skin layer is an LLDPE with an MI of 2.5 g/10 min or less and an MIR of less than 35 and no or less than 15 wt% based on the total weight of polymer in the skin layer of an HPPE.

The composition of the skin layers can be varied widely provided excessive use of long chain branched polyethylenes is avoided that would negate the benefit of incorporating the homogeneously branched polymer in the core layer. The skin layer may comprise at least 40 wt% of a linear polyethylene, such as an mLLDPE, having a density of 0.88 to 0.94 g/cm³ and an Mw/Mn of from 1.8 to 2.8, and less than 5wt% of or no HPPE. Preferably the linear polyethylene having an MIR of less than 35 in the skin layer has a difference between the MD Tensile force (stress) based on ASTM D882-02 at 100% elongation and MD 10 % Offset yield of a reference film as defined herein having a thickness of 25 µm of less than 7 MPa. The skin layer may comprise at least 40 wt% a linear polyethylene having a density of 0.88 to 0.94 g/cm³ and an Mw/Mn of from 1.8 to 4 and no or less than 5wt% of HPPE, said wt % being calculated on the total polymer wt in the skin layer. The film overall may contain no or less than 10 wt%, preferably less than 5 wt% of HPPE based on the total weight of polymer in the film.

The core layer may comprise (i) from 10% to 95 wt%, optionally from 15 to 40 wt %, of the high MIR linear polyethylene of the invention, less than 5 wt% of or no HPPE, and (ii) at least 5 wt% of a stiffness modifying or strength enhancing linear polyolefin having an MIR of less than 30, which may form the balance, said wt % being based on the total weight of polymer in the core layer. The stiffness modifying or strength enhancing linear polyolefin may comprise at least 50 wt% based on the total weight of polymer in the core layer or consists of a linear polyethylene having a density of 0.88 to 0.94 g/cm³, and MIR of less than 30 and Mw/Mn of from 1.8 to 4. The homogeneously branched linear polyethylene of the invention may be effective when used in low amounts in the core layer in promoting the optical properties of the film overall and permits HPPE to be dispensed with, whether used for its optical contribution or its processability contribution. Thus the core layer can accommodate other polymers to modify the properties of the film in a variety of manners.

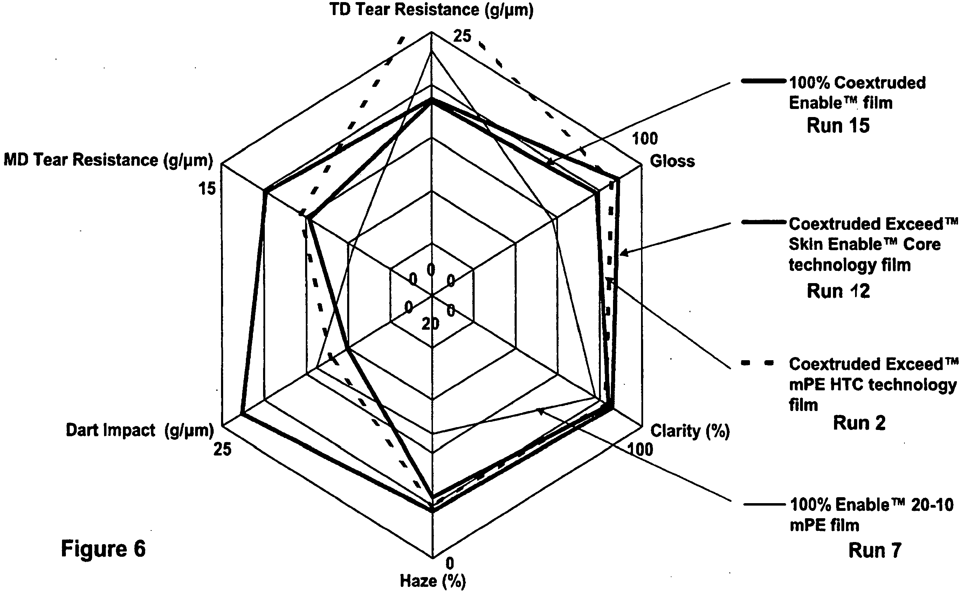

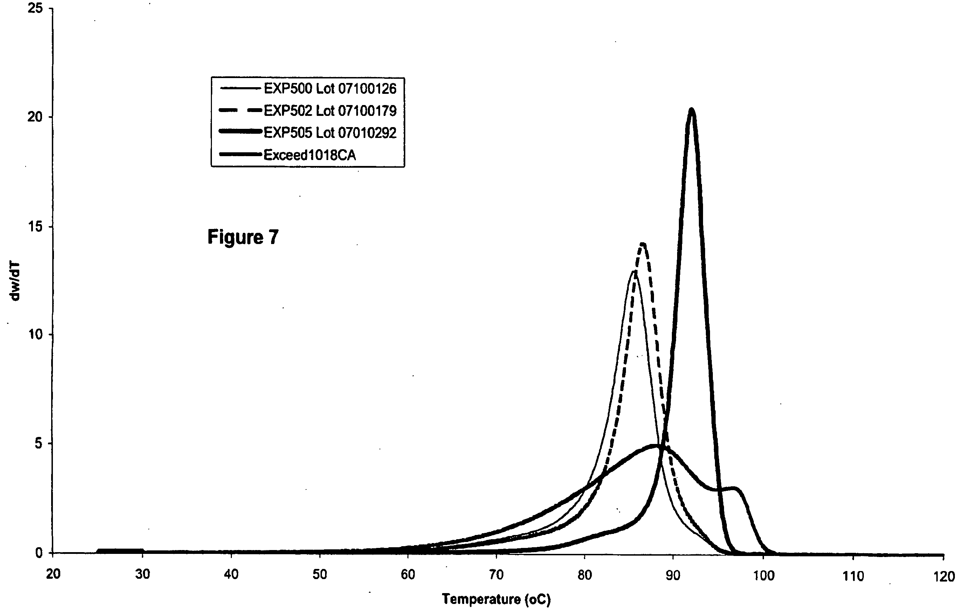

The technical effect provided may be appreciated by comparing the performance of individual polymers with an average density between 0.918 and 0.922 in a 50 µm blown monolayer film. Low MIR, non-branched linear mLLDPE extruded at typical output rates consistent with its melt strength has a typical haze value of 20% (poor); a typical Dart impact strength of 22 g/µm(good) and an Elmendorf tear strength typically in the region of 11-16 g/µm (good) with the machine direction (MD) tear strength lower than the transverse direction (TD) tear strength. The seal initiation temperature will generally be 105 °C (low, good). As the molecular weight is raised and the MI lowered, the tendency will be for the haze to improve, the tear strength to get worse, while the MIR remains unchanged. High MIR, presumably branched linear mLLDPE under the same conditions typically has a lower haze of 9 % (medium); a much lower Dart impact strength of 8 g/µm (medium) and a lower Elmendorf tear strength in the region of 4-10 g/µm (medium) with the machine direction (MD) tear strength lower than the transverse direction (TD) tear strength. The seal initiation temperature is generally slightly but significantly higher at 110 °C. As the molecular weight is raised and the MI lowered, the tendency will be for the haze to worsen, while the shear sensitivity as measured by MIR increases. LDPE of the same MI processed as the mLLDPE under similar conditions to the branched linear mLLDPE typically has a haze of 6 % (medium), a very low Dart impact strength of 2 g/µm (poor) and a slightly lower Elmendorf tear strength of 3-5 g/µm (poor) with MD higher than TD at high MI. The seal initiation temperature is raised further and is generally at 120 °C (poor). As the molecular weight is raised and the Melt Index lowered, the tendency will be for the haze to worsen and increase up to 16 % while the shear sensitivity as measured by MIR would be much increased to 80. The MD Elmendorf tear strength will be lower than the TD tear strength. The combined effects are described in the examples by reference to Figures 6 and 7.

The invention is based on the recognition that the high MIR linear polyethylenes of the invention, when encapsulated in a core layer between non-branched linear polyethylene contact or skin layers, can provide an overall effect which combines the superior aspects of each component. Thus the physical properties in terms of haze, impact and tear strength can be improved beyond that which would be deemed possible from the individual components within conventional blown film processing constraints. The multi-layer structure of the invention may approximate or exceed best results seen above collectively with potentially a haze of 6 % or less (see the LDPE film haze above for a 50 µm film) that may even be lower than any of the contributing polymers; a dart impact strength of 20 g/µm or more (see the performance of the film of the non-branched linear polyethylene above), a tear strength of 11-16 g/µm (again compare with the non-branched linear polyethylene film), a seal initiation temperature of 105 °C (again compare with the non-branched linear polyethylene film), and a processability as evidenced by the LDPE MIR of 50-80 (see the LDPE MIR haze above). The use of HPPE such as LDPE can be minimized or even eliminated. The performance of films using the widely practiced combination of znLLDPE and LDPE can be matched or exceeded. The use of the homogeneously branched polymer of the invention also can permit the formulation of a wide range of films from a limited range of polymers facilitating management of polymer supplies in a film manufacturing plant.

In the multilayer films of the invention the composition of skin layers can be formulated using polymers having a superior mechanical performance without the use of blending with LDPE for the purpose of improving haze or processability. An excellent impact resistance may then be obtained. The core layer can then be freely tailored to optimize other performance aspects. The stiffness modifying or strength enhancing linear polyolefin may comprise or consist of one or more linear olefin polymers having an aggregate crystallinity higher than that of the homogeneously branched linear polyethylene; and preferably include an HDPE or a propylene derived polymer. The stiffness modifying linear polyolefin may alternatively comprise or consist of one or more linear olefin polymers having an aggregate crystallinity lower than that of the homogeneously branched linear polyethylene; and preferably include a linear polyethylene having a density of less than 0.91 g/cm³, preferably less than 0.9 g/cm³ or a less crystalline propylene derived polymer having a heat of fusion of less than 70 J/g as determined by DSC.

By selecting additional components that have a generally homogeneous molecular weight distribution and composition distribution, such as various mPE's, mechanical properties can be optimized in addition to any stiffness modifying effects. Relatively small amounts of the high MIR linear polyethylene of the invention may suffice to optimize the balance of finished film properties and processability. Mechanical properties may be optimized by the other polymer components in the core layer and by excluding any HPPE polymer to the maximum extent possible.

In most film structures the core contact layers will also be the skin layers in A/B/A type structures. However multiple core layers may be used as in A/B/A/B/A structures. Layers may also be extruded, provided the performance is not unduly handicapped by using additional outer layers as in C/A/B/A/C type structures. The multiple A, B, and C layers may be the same or different and use different linear polyethylenes or different blends of polymers. In the specification and claims reference is made to core layers and skin layers. Where films contain four or more layers, the layer below the skin layer is regarded and defined in the description and claims to be the, or one of the, "core layer(s)". Thus a five layer structure may possess two core layers underneath each of the skin layers and a further central layer may be interposed between the "core layers". Again in the description and claims, a film may have one skin layer and core layer conforming to the invention with other core and/or skin layers differentiated, although mostly the films will have a symmetrical structure.

Given the satisfactory mechanical properties that can be achieved and the degree of orientation that can be imparted without reaching the draw down limit of the film, the films may be made thinner for a given performance level than hitherto practicable and be "down gauged". Suitably the films have a thickness of from 5 to 200 µm, preferably from 10 to 180 µm, and especially at least 25 µm. Useful effects may be obtained using core layers that are relatively thin compared to the skin layers.

The film properties may be optimized by controlling the deformation or strain rates in the manner suggested in WO2007/141036 but many film structures according to the invention may be produced at lower strain rates yet provide the benefits commented on above, again enhancing film manufacturing flexibility.

### DETAILS OF THE INVENTION

The high MIR linear polyethylene is preferably selected to have characteristics indicative of a significant level of long chain branching. Advantageously then the density is at least 0.921 g/cm³, preferably at least 0.925 g/cm³ as determined by ASTM D1238 and/or the I_{2.16} is from less than 0.4, preferably 0.3 or less as determined by ASTM-1238 Condition 2.16 kg, 190°C.

Where a low MIR mLLDPE is used in the core having an MIR of less than 30, preferably polymer fractions extracted by hexane are less than 1.5 wt %, preferably less than 1 wt %, especially less than 0.6 wt %. Levels of anti-block particulates may vary. The FDA hexane extractable test used is from the version current to 07 July 2003. The test was performed according to 21 CFR 177.1520 (d)(3)(ii)(e) using a film for extraction and weighing the dried film after extraction and drying to measure the weight loss. The T₇₅-T₂₅ value determined by TREF measurement as described herein for the low MIR linear polyethylene made using a single site catalyst such as a metallocene is preferably from 9 to 15 °C. The non-branched linear polyethylene may be a commercially available metallocene derived polymers such as Exceed ^{(™)} sold by ExxonMobil Chemical Company.

The non-branched linear znLLDPE's made using Ziegler-Natta titanium based catalysts are less preferred for the core and skin and may have inferior mechanical properties to non-branched mLLDPE's. They may have hexane extractables above 2 wt %, preferably above 4 wt%, and a T₇₅-T₂₅ value determined by TREF measurement as described herein in excess of 20 °C.

The high MIR linear polyethylenes can be conveniently prepared by polymerization in a gas phase, slurry or solution polymerization for example. The polymers of the invention used in the examples were produced by gas phase technology using supported single site catalyst systems. The use of anti-block is preferably minimized to maintain film clarity. Use of linear polyethylene materials, and especially non-branched linear polyethylenes, in the skin layers permit reduction of the anti-block additives which have a negative impact on haze. Preferably the skin layer comprises less than 8000 ppm of opacifying agent such as anti-block particulates, preferably less than 2000 ppm of anti-block particulates, and more preferably less than 500 ppm. Particle sizes of talc or silica anti-block useful for anti-block in films may vary as is well known in the art. Slip agents may be added to modify the surface properties such as friction.

The low MIR linear mLLDPE may be made by gas phase polymerization processes such as those described in WO1994/25495. The preferred material is an mLLDPE. The high MIR linear polyethylenes of the invention may be made following the general teaching of WO1998/4401 but adjusted in terms of molecular weight, density etc. to target the combination of properties required for the invention.

The molecular weight distribution expressed as a Mw/Mn value, as measured by GPC as described herein may vary from 1.5 to 4. The high MIR linear polyethylenes may have a slightly broader molecular weight distribution than the low MIR linear polyethylenes made using single site catalysts. For the high MIR linear polyethylene, preferably the Mw/Mn is from 3 to 4. For the low MIR linear mPE types the Mw/Mn is preferably from 1.8 to 2.8, especially higher than 2 and/or lower than 2.6.

The MIR expressed in I_{21.6}/I_{2.16}, determined following the ASTM test methods described herein, may be influenced by the molecular weight distribution and the level of long chain branching. The low MIR linear mPE types may combine an Mw/Mn of from 2 to 3 with an MIR of 10 to 25. High MIR linear mPE may have an Mw/Mn of from 3 to 4 and an MIR of preferably from 35 to 80.

The density of the linear polyethylenes may be controlled by short chain branching resulting from the incorporation of alpha-olefin comonomers having from 3 to 10 C-atoms, such as propylene, butene-1, hexene-1 and octene-1. The MI can be controlled by adjusting process parameters such a hydrogen, temperature etc in a manner known to a person skilled in the art.

While the disclosures in the patent specification referred to above rely on metallocene single site supported catalysts, other transition metal components have emerged since their publication which may serve as single site catalysts and provide appropriate polymer homogeneity and absence of low molecular weight extractables. In addition conventional titanium based Ziegler Natta catalyst systems may be optimized to reduce the production of low molecular weight extractables. Such polymers can be equally suitable for the films of the invention and are to be understood as falling in the category of linear polyethylene as defined herein and are to be considered embraced by the mPE designation.

While it is among the objects of the invention to minimize the use of heterogeneously branched HPPE's, these polymers can be used to a limited extent if necessary. Where HPPE is used, it may have a density of generally greater than 0.9 g/cm³ and preferably from 0.92 to 0.94 g/cm³. HPPE's may have a MIR (I_{21.6/}I_{2.16}) higher than that of the LLDPE in the skin layer, preferably at least 5, 10 or 20 units higher. The HPPE may have a molecular weight distribution Mw/Mn as determined by GPC of from 5 to 40.

A wide variety of polymers and compositions may be used for the skin layers, including skin layers with special compositions as taught by the art, provided the composition does not override the contribution made by the homogeneously branched linear polyethylene used essentially in the core layer. In general that means that the use of homogeneously branched linear polyethylene or heterogeneously branched polyethylene should be limited. Different LLDPE types may be used including mLLDPE and znLLDPE, optional addition of softening low density polymers such as VLDPE or stiffening polymers such as HDPE. Preferably the overall MI of the skin layer is less than 1.5 and/or has a density less than that of the core layer overall.

### DETAILS OF FILM STRUCTURE

The thickness of the films may range from 4 to 200 µm in general and is largely determined by the intended use and properties of the film. Stretch films may be thin; those for shrink films or heavy duty bags are much thicker. Conveniently the film has a thickness of from 5 to 200 µm, preferably from 10 to 180 µm, and especially at least 25 µm. The thickness of each of the skin layers may be at least 7% of the total thickness, preferably from 10 to 40 %. The skin layer may have a thickness less than that of the core layer. The core layer may be at least 20% of the total thickness. Where appropriate however the skins can be made thicker than the core layers, for example where a large amount or more heavily branched homogeneously branched linear polyethylene is used in the core layer. For example, using 10 wt% or more of the homogeneously branched linear polyethylene in the core with a layer distribution of 4/1/4, would limit the total amount of branched polyethylene to 1.1 wt% or more assuming the balance of the core and the entire skin consists of non-branched polyethylenes.

The films of the invention may be adapted to form flexible packaging films for a wide variety of applications such as cling film, low stretch film, non-stretch wrapping film, pallet shrink, over-wrap, agricultural, and collation shrink film and laminated films, including stand-up pouches. The film structures may be used for bags are prepared such as sacks, trash bags and liners, industrial liners, produce bags, and heavy duty bags. The bags may be made on vertical or horizontal form, fill and seal equipment. The film may be used in flexible packaging, food packaging, e.g., fresh cut produce packaging, frozen food packaging, bundling, packaging and unitizing a variety of products. A package comprising a film described above can be heat sealed around package content. The film and package can display an improved seal strength in form-fill-and seal machinery; improved optical properties as measured by haze and improved stiffness and resistance to stretching that is important for some applications. Flexible thin films comply readily with other surfaces and with suitable additivation can be used as cling film. Thicker films with a relatively high amount of linear polyethylene can be cold stretched and exert a contracting force around articles or bundles of article around which they are wrapped. They are described as stretch films.

The tendency to shrink when heated can be emphasized to provide shrink films. By providing suitable skin layers non-stretch film or stretch films can be heat sealed. Clear films may be used for wrapping articles and heat sealing for bags. In this case the films have a composition and structure and are made by a form of extrusion that limits heat shrinkage and stretch properties. These are referred to herein as wrapping films. Clear films may also be produced to have the ability to shrink, which is generally achieved by incorporating a long chain branched polymer which can be induced to shrink upon heating. These are referred to as heat shrink films. Clear films may also be produced to permit their stretching under ambient temperature conditions so that the return force can be used to achieve a bundling effect. These are referred to as stretch films. While these films have different end uses, they still share the need to be clear, to have high impact strength and to be easily processable. Improved version of such films may be made using the invention.

The invention permits the high MIR linear polyethylene polymer of the invention to be used in a variety of film structures for different applications, using varying amounts of the polymer in the core using different combination of other polyethylene materials in the balance of the core and the skin layers.

Stretch films may be provided having film has a thickness from 4-40 µm with the skin layer composition (preferably in an A/B/A structure) consisting substantially of a linear polyethylene, including VLDPE and/or LLDPE and the core layer consisting of substantially of a high MIR linear low density polyethylene of the invention, wherein the film is a stretch film structure having an elongation at break of at least 200% as tested by a method based on ASTM D882-02. Cling effects may be produced by using polymers with high levels of extractables or cling additives in conventional manner. Stretch may vary. Suitably the film has a thickness from 8-20 µm. At least 20wt% of the core may be a homogeneously branched linear polyethylene. The core contact layer may contain at least 60 wt% of a znLLDPE having a density of less than 0.925 g/cm³. Preferably the skin layer contains at least 60 wt% of a znLLDPE having a density of less than 0.925 g/cm³. The low molecular weight impurities in the znLLDPE are believed to be driven to the surface in amounts sufficient to provide cling. znLLDPE with short chain branching derived from hexene-1 as comonomer may be especially suitable. By using a znLLDPE in the skin layer, the invention produces a surface that has a certain amount of inherent cling that can reduce the amount of expensive cling additive that must be added to obtain satisfactory cling force. Thin stretch film may be produced in a partially oriented form (often referred to as "pre-stretched" by persons skilled in the art) to minimize the amount of stretch that needs to be applied when packaging articles.

Heat shrink films may be produced showing thermal shrinkage properties in both MD and optionally in a TD direction. The film may have a thickness from 15-150 µm, the skin layer composition consists substantially of a linear polyethylene, including VLDPE, LLDPE and/or HDPE and the core layer consisting of at least 60 wt % of a high MIR linear low density of the invention and no or less than 30 wt% of an HPPE, preferably less than 10% of an HPPE having thermal shrinkage in both MD of at least 50 % and TD direction of at least 0% as determined at 150°C on a Betex hot plate. The film may be in a flat form (i.e. the extruded tube is cut longitudinally and the film laid flat) and serve as a collation shrink film structure having thermal shrinkage properties in MD of at least 65% and TD direction of at least 0 %. Alternatively it may be left uncut and used in tubular form for pallet or heavy duty shrink film having thermal shrinkage properties in MD of 75% or less and in a TD direction of at least 30 %. For collation shrink the flat film is placed over the bottles and then shrunk to hold the bottle together. For pallet shrink, the tube is slipped over palletized loads and then shrunk in positions to hold the goods together. Heat shrink films may be advantageously produced on biaxially orienting blown film extrusion equipments, often referred to as the double bubble process to increase TD orientation.

Thicker films of from 40 to 200 µm may be used as heavy duty bags. For heavy duty bag uses, the film may have a thickness of from 80-150 µm and provide a Dart impact resistance of more than 7 g/µm. For frozen food packaging, the film may have a thickness of from 25-90 µm, and have a Dart impact resistance of more than 5 g/µm. Stiff packaging may be produced with a thickness from 20 to 80 µm using a higher amount of HDPE with the core layer having at least 20 wt% of a homogeneously branched linear polyethylene

Laminates may be produced using a film of the invention with a thickness from 30-150 µm, a skin layer composition consisting substantially of a linear polyethylene, including VLDPE and/or LLDPE, preferably a mLLDPE, with a density of less than 0.920 g/cm³ and a core layer consisting substantially of a high MIR linear low density polyethylene of the invention to allow the film provide an adhesive layer that connects outer layers of the laminate adjacent the film.

### Drawings

The drawing illustrate the characteristics of the polymers of the invention and the performance of coextruded films of the invention by the following figures:
Figure 1A represents an exemplary stress elongation curve made in the course of a tensile test which illustrates the determination of the true yield point of a polymer;
Figure 1B represents an exemplary stress elongation curve made in the course of a tensile test which illustrates the determination of the 10% offset yield point of a polymer;
Figure 2 represents an exemplary stress elongation curve made in the course of a tensile test which illustrates the determination of the elongation at break of a polymer;
Figures 3 and 4 represent stress elongation curves from which yield points and elongation at break can be derived. Figure 3 shows respectively a high MIR, homogeneously branched mLLDPE according to the invention and high MIR, homogeneously branched mLLDPE's disclosed in WO2007/141036. Figure 4 shows a commercially available non-branched C8 znLLDPE (Dowlex 2045G), homogeneously branched C8 mLLDPE grade (Elite 5400) and a non-branched C6 mLLDPE grade (Exceed 1018CA).
Figures 5 and 6 are star charts showing the improved combination of properties available by the use of the films referred to in the specification.
Figure 7 shows the TREF curves of different polymers used in the calculation of the T₇₅-T₂₅ values.

### Tests and standards

The polymer and film properties were determined in accordance with the following test procedures. Where any of these properties is referenced in the appended claims, it is to be measured in accordance with the specified test procedure. Where appropriate, "MD" indicates a measurement in the machine direction in the direction of extrusion, and "TD" indicates a measurement in a direction transverse thereto.

### Polymer properties (Table 1)

Melt Index, I_{2.16}, reported in grams per 10 minutes (g/10 min), refers to the melt flow rate measured according to ASTM D-1238, condition E using a load of 2.16 kg at 190 °C. The Melt Index Ratio (MIR) expressed in I_{21.6} / I_{21.6} is determined following the above ASTM tests method, with I_{21.6} representing a measurement using a load of 21.6 kg at 190 °C. It is a dimensionless number representing the ratio of the high load melt index to the low load melt index.

The densities are determined herein in the specification and claims according to ASTM D2839/D1505 (LDPE) or ASTM D4703/D1505 (LLDPE, HDPE) or ISO1133 (VLDPE).

The melting point and heat of fusion referred to in the description and claims were determined by DSC according to ASTM-3418.

Weight average molecular weight (Mw), number average molecular weight (Mn) and molecular weight distribution as Mw/Mn were measured using a High Temperature Size Exclusion (SEC) Chromatograph (Waters Alliance 2000), equipped with a differential refractive index detector (DRI). Three Polymer Laboratories PL gel 10mm Mixed-B columns were used. The nominal flow rate was 1.0 cm³ /min, and the nominal injection volume was 300 µL. The various transfer lines, columns and differential refractometer (the DRI detector) were contained in an oven maintained at 145°C.

Polymer solutions were prepared in filtered 1,2,4-trichlorobenzene (TCB) containing approximately 1000 ppm of butylated hydroxy toluene (BHT). The same solvent was used as the SEC eluent. Polymer solutions were prepared by dissolving the desired amount of dry polymer in the appropriate volume of SEC eluent to yield concentrations ranging from 0.5 to 1.5 mg/mL. The sample mixtures were heated at 160 °C with continuous agitation for about 2 to 2.5 hours. Sample solutions were filtered off-line before injecting to GPC with 2µm filter using the Polymer Labs SP260 Sample Prep Station.

The separation efficiency of the column set was calibrated using a series of narrow MWD polystyrene standards, which reflects the expected molecular weight range for samples and the exclusion limits of the column set. Seventeen individual polystyrene standards, ranging from Mp ∼580 to 10,000,000, were used to generate the calibration curve. The polystyrene standards are obtained from Polymer Laboratories (Amherst, MA). To assure internal consistency, the flow rate is corrected for each calibrant run to give a common peak position for the flow rate marker (taken to be the positive inject peak) before determining the retention volume for each polystyrene standard. The flow marker peak position thus assigned was also used to correct the flow rate when analyzing samples; therefore, it is an essential part of the calibration procedure. A calibration curve (logMp vs. retention volume) is generated by recording the retention volume at the peak in the DRI signal for each PS standard, and fitting this data set to a 2nd -order polynomial. The equivalent polyethylene molecular weights are determined by using the following Mark-Houwink coefficients:

| | k (dL/g) | a |
|---|---|---|
| PS | 1.75 x 10 -4 | 0.67 |
| PE | 5.79 x 10 -4 | 0.695 |

The DRI detector generated elution profiles which were converted using known software to generate Mw and Mn values.

The T₇₅-T₂₅ value represents the homogeneity of the composition distribution as determined by Temperature rising elution fractionation ("TREF"). A TREF curve is produced as described below. Then the temperature at which 75% of the polymer is eluted is subtracted from the temperature at which 25% of the polymer is eluted, as determined by the integration of the area under the TREF curve. The T₇₅-T₂₅ value represents the difference. The closer these temperatures comes together, the narrower the composition distribution.

Temperature rising elution fractionation is performed as described, for example, in U.S. Patent 5,008,204 or in Wild et al., 3. Polv. Sci, Polv. Phvs. Ed., vol. 20, p. 441 - 20 (1982), both of which are hereby fully incorporated herein by reference for US purposes. The composition distribution was determined using an analytical TREF 200 (PolymerChar, Spain), equipped with an infrared detector (IR). A PolymerChar stainless steel column with a length of 15 cm, an inner diameter of 0.78cm and an outer diameter of 3/8" (9.5 mm) was used. The column was filled with 1mm stainless steel beads. The transfer lines, switching valves and IR detector were contained in an oven maintained at 140°C.

The polymer was dissolved in filtered orthodichlorobenzene (ODCB) containing 400 ppm of butylated hydroxy toluene (BHT) at 160°C for 1 to 2 hours. The nominal 0.5 ml of polymer solution with a concentration of 3 - 5 mg/ml was injected onto the column and stabilized at 140°C for 45 minutes, then allowed to crystallize in the column by slowly reducing the temperature from 140°C to 30°C at a constant cooling rate of 1.0 °C/min. Subsequently, the ODCB was pumped through the column at a flow rate of 1.0 ml/min, and the column temperature was increased at a constant heating rate of 2 °C/min to elute the polymer. The concentration in the eluted liquid was detected by means of measuring the absorption at a wavenumber of 2857 cm⁻¹ using an infrared detector. The concentration of the ethylene-a-olefin copolymer in the solution was calculated from the absorption and plotted as a function of temperature.

### Film properties

Thickness was measured using a Micrometer and is measured also during the haze measurement. The thickness of the constituent layers is determined by calculation from the loss of weight feeders of the coextrusion line for a given output of film. The relative output multiplied by the density of the extruded material determines the layer distribution. It can be confirmed afterwards if necessary by using a microtomed sample of the film cut in cross section and examined by optical microscopy using polarised light so the individual layers become visible and can be measured relative to each other and relative to the total thickness of the film in question.

Haze was measured according to a procedure based on ASTM D-1003 using a Hunterlab Ultrascan XE spectrophotometer. The haze is the ratio in % of the diffused light relative to the total light transmitted by the sample film. The haze is measured in total transmittance mode, illuminant C, 2° observer, scale XYZ as standard.
Illuminant C:overcast skylight, 6740K
2° observer:2° filed of view, focus on the fovea 1931 CIE standard observer
Scale XYZ:X=red light related/red/green coder
Y=green light related/black white coder
Z=blue light related/blue-yellow coder
Only the Y value is relevant for haze; Y represents the total light transmitted through the sample.

Where the description and claims refer to the characteristics of a "reference film" it concerns a 25 µm film produced in accordance with the monolayer set up set out in [0081] that is to say the Alpine monolayer set up in Table 3, unless otherwise mentioned.

The tensile properties of the films are tested by a method which is based on ASTM D882-02 with static weighing and a constant rate of grip separation using a Zwick 1445 tensile tester with a 200N or 50ON load cell. The 50ON load cell is used for films of greater thickness, for example 100 µm or more. The deformation is measured by means of the crosshead position. Since a rectangular shaped test specimen is used, no additional extensometer is used to measure extension. The nominal width of the tested film sample is 15 mm and the initial distance between the grips is 50 mm. A pre-load of 0. IN was used to compensate for the so called TOE region at the origin of the stress-strain curve. The constant rate of separation of the grips is 5 mm/min upon reaching the pre-load, 5 mm/min to measure 1% Secant modulus (up to 1% strain), 500 mm/min to measure yield point, 10% offset yield, and break point. The film samples may be tested in machine direction (MD) and transverse direction (TD). While the standard permits number of performance aspects related to the tensile properties to be determined, in this specification the following were measured:

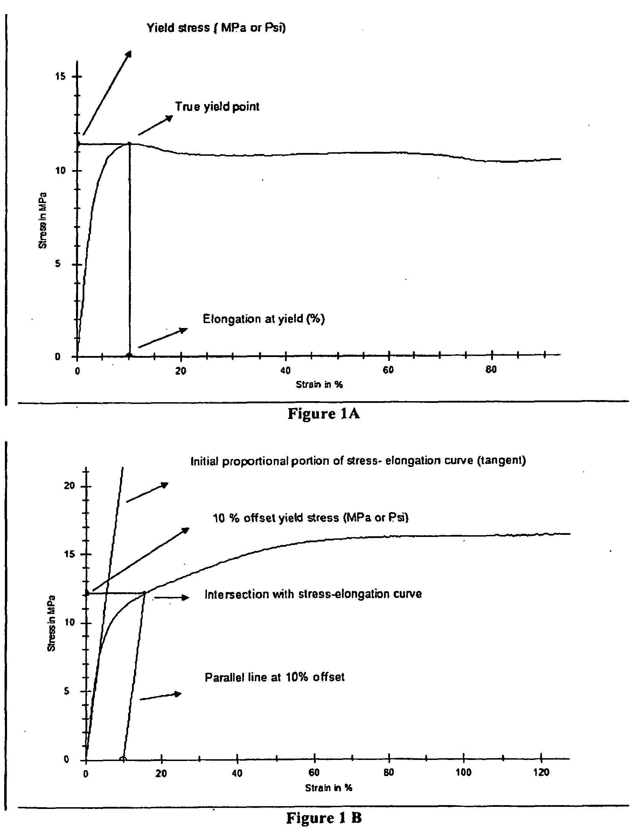

The yield point is defined as the first point on the stress-strain curve at which an increase in strain occurs without an increase in stress. In some cases a true yield point can be found on the stress-elongation diagram where the stress reaches a maximum (see Figure 1A). This indicates that the stress declines when the film is elongated beyond the yield point. Yield strength is the stress at the yield point and is expressed in MPa. Elongation at yield is the elongation at the yield point and is expressed in % (see Figure 1A).

For some PE film samples (especially in MD) no true maximum appears (see Figure 1B). The stress necessary for further elongation increases; but at a slower rate. The stress elongation curve shows a shoulder before reaching a so-called plateau region where the film sample can be elongated at low additional stress. In such a case the offset yield point is determined. In the description and claims the 10 % offset yield stress is the stress in MPa at the 10 % Offset yield point expressed as the intersection point between the stress-elongation curve and the line at 10 % offset (parallel line to the tangent to the initial straight proportional portion of the stress-elongation curve). When a true distinctive yield point can be detected preferably this should be reported first, in this case the offset yield can also be calculated and reported. When no true yield point can be detected, only the 10% offset yield point is calculated and determined (see Figure 1B for illustration of this determination). Linear polyethylenes generally do not have a true yield point and can be elongated significantly with low additional stress.

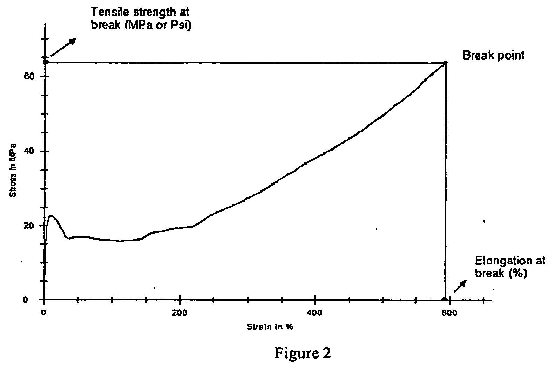

Some polymers display a tendency of needing increased levels of stress for further elongation beyond the plateau region. Elongation of the sample can continue to the point where it breaks. The elongation at break is the strain at the corresponding break point. It is expressed as a change in length per unit of original length multiplied with a factor 100 (%), see Figure 2.

Dart Impact was measured by a method following ASTM D-1709-04 on a Dart Impact Tester Model C from Davenport Lloyd Instruments in which a pneumatically operated annular clamp is used to obtain a uniform flat specimen and the dart is automatically released by an electro-magnet as soon a sufficient air pressure is reached on the annular clamp. The test measures energy in terms of the weight (mass) of the dart falling from a specified height, which would result in 50% failure of specimens tested. Method A used darts head made of Tuflon™ (a phenolic resin) with a diameter of 38mm dropped from a height of 660 mm for films whose impact resistance requires masses of 50 g or less to 2 kg to fracture them. Method B employs a dart with a diameter of 51 mm dropped from a height of 1524 mm with an internal diameter of the specimen holder of 127 mm for both method A and B. The values given are acquired by the standard Staircase Testing Technique. The samples have a minimum width of 20 cm and a recommended length of 10m and should be free of pinholes, wrinkles, folds or other obvious imperfections. Samples are taken in MD in order to avoid thickness discrepancies.

The Elmendorf tear strength is based on ASTM D-1922-03a using the Protear Tearing Tester 2600 and measures the energy required to continue a pre-cut tear in the test sample. The potential energy of the raised pendulum is converted into kinetic energy during the swing. The total work done in tearing the film sample is the difference between the initial potential energy of the raised pendulum and the remaining potential energy at the completion of the tear. Two pendulums and appropriate augmenting weights may be used: 400 and 800 g weights for the 200 g pendulum system and 3200 and 6400 g weights for the 1600 g pendulum system. The Protear equipment reports average tearing resistance for a 43 mm tearing distance. The augmenting weights: may be 400, 800, 1600, 3200 and 6400 g. A minimum of 6 samples each in MD and TD direction with a sharp knife and the dedicated mould. The thickness of each sample is measured at the tear area at a minimum 3 points; the average is recorded as the sample thickness. The pendulum base weight is selected by estimating the test range. At the 200 g to 800 g test range, the 200 g pendulum is used, and at the 1600 g to 6400 g test range the 1600 g pendulum is used. The test weight is selected so that the test results will be between 20% and 80% of the pendulum scale. The line of tear should fall within 60 ° at either side of the vertical for valid data points.

Shrink, reported as a percentage, was measured by cutting circular specimens from a film using a 50 mm die. The samples were then put on a copper foil and embedded in a layer of silicon oil. This assembly was heated by putting it on a 150°C hot plate (model Betex) until the dimensional change ceased. An average of four specimens is reported. A negative shrinkage number indicates expansion of a dimension after heating when compared to its preheating dimension.

### Example polymers

TREF measurements were used to determine T₇₅-T₂₅ values of selected polymers providing TREF curves shown in Figure 7. The following polymers were used to make films or included for comparison with each other:

**Table 1**

| Polyethylene polymer | MI g/ 10 min | Density ρ g/cm³ | MIR | T₇₅-T₂₅ °C | Mw/ Mn | ρ> 0.04MI+0.91 (Y/N) |
|---|---|---|---|---|---|---|
| **Heterogeneously branched Escorene LDPE:** | | | | | | |
| LD165BW1 | 0.33 | 0.922 | 88 | 9.2 °C (84.4-75.2) | 6.4 | n/r |
| NX00328 | 0.35 | 0.928 | 80 | n/a | 4.8 | n/r |
| LD166BA | 0.2 | 0.9225 | 90 | n/a | 6.8 | n/r |

| **znLLDPE** | | | | | | |
|---|---|---|---|---|---|---|
| Dowlex 2045G | 1 | 0.920 | 30 | n/a | 3.5 | n/r |
| ExxonMobil LL1001XV | 1 | 0.918 | 25 | 24.2 °C (93-68.8) | 3.9 | n/r |

| **Low MIR mLLDPE (no LCB)** | | | | | | |
|---|---|---|---|---|---|---|
| Exceed (ECD) 1018A | 1.0 | 0.918 | 16 | 11.9 °C (91.1-79.2) | 2.1 | n/r |

| **High MIR mLLDPE (with LCB)** | | | | | | |
|---|---|---|---|---|---|---|
| Enable 20-05 (EXP502) | 0.5 | 0.920 | 38-45¹⁾ | 4.8 °C (87.7-82.9) | 3.3 | N |
| Enable 20-10 (EXP500) | 1 | 0.920 | 33-40 | 5.3 °C (86.6-81.3) | 3.3 | N |
| Enable 27-05 (EXP501) | 0.5 | 0.927 | 41 | 3.6 °C (92.4-88.8) | 3.4 | N |
| Enable 27-03 *(EXP505) | 0.3 | 0.927 | 46-58 | 3.1 °C (92.8-89.7) | 3.4 | Y |
| Dow Elite 5400G | 1 | 0.916 | 30 | 10 °C (74.3-64.3) | 3.6 | N |

| **ExxonMobil HDPE** | | | | | | |
|---|---|---|---|---|---|---|
| HTA108 | 0.7 | 0.961 | 66 | 2.7°C (103.8-101.1) | 9.4 | n/r |

| | | | | | | |
|---|---|---|---|---|---|---|
| n/a= not available; n/r=not relevant; *this mLLDPE is according to the invention; MIR values may vary between production runs. Typical values are shown. Data in Figure 3 is derived from a batch with the last mentioned MIR value. | | | | | | |

The ExxonMobil LL1001XV, Exceed™ and Enable™ polymers are or will be commercially available from ExxonMobil Chemical Company. Exceed (ECD) 1018A was prepared by the gas phase polymerization process described in WO1994/25495. The Enable homogeneously branched long chain branched linear polyethylenes may be made by the process described in WO1998/44011 using a supported catalyst with a bridged bis-indenyl zirconocene transition metal component and methyl alumoxane cocatalyst. For the new Enable grade according to the invention marked *, the lower MI can be reached by reducing the hydrogen level in the reactor while the higher density can be obtained by reducing the level of hexene-1 comonomer using conventional process control techniques.

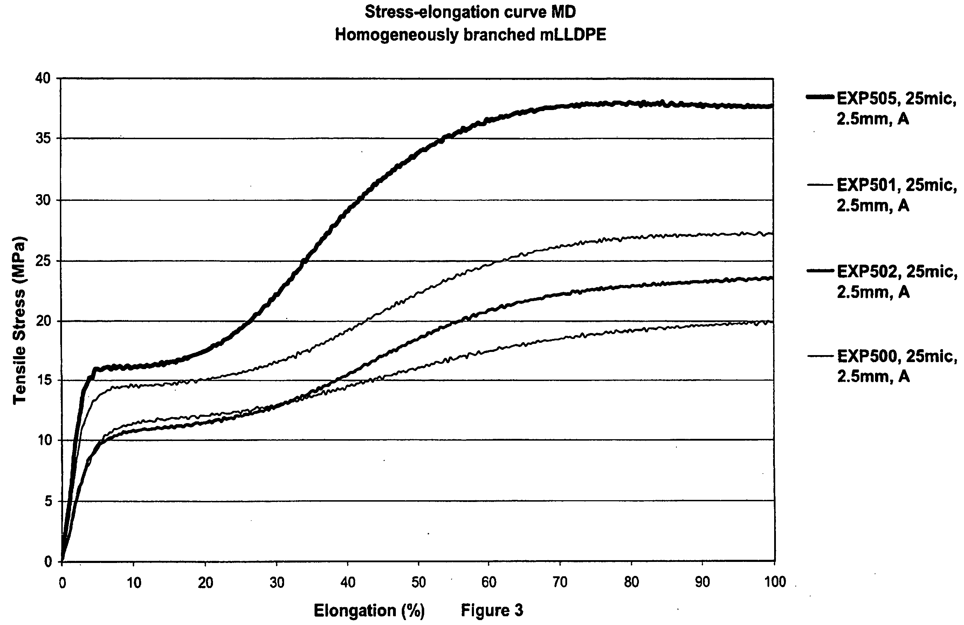

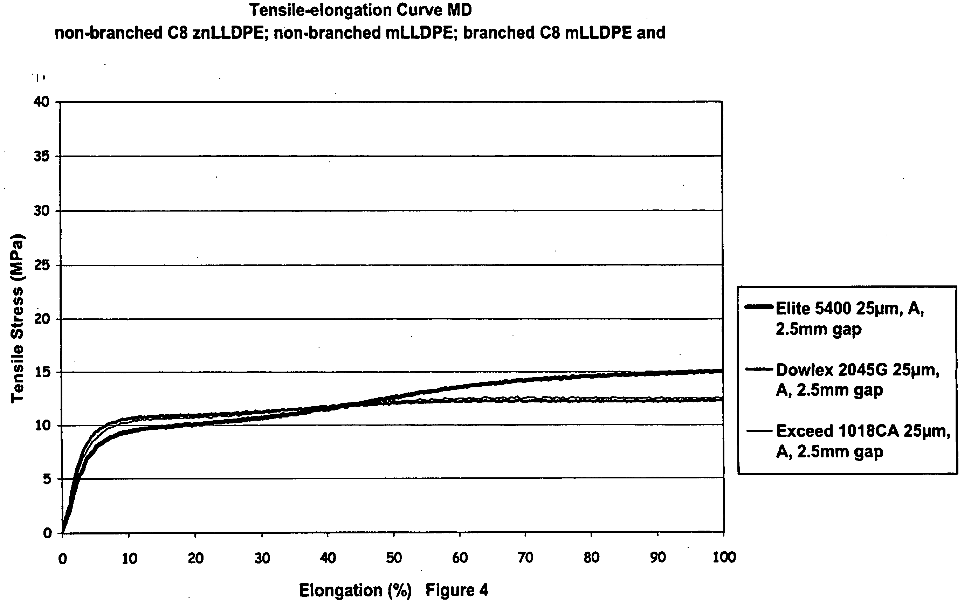

The properties of reference films prepared according to [0069] above and [0081] with Table 3 below were then subjected to a stress elongation test according to the procedures described above. The resulting stress-elongation curves are shown in Figures 3 and 4. From the plots, the characteristic data for the reference films can be calculated. They are as shown in Table 2:

**Table 2**

| Polyethylene polymer (25 µm film thickness) | 10% MD offset yield point (MPa) | MD Tensile at 100% elongation (MPa) | ΔMD Tensile 100% and 10 % yield (MPa) | Tm (°C) |
|---|---|---|---|---|
| **Escorene LDPE:** | | | | |
| LD165BW1 | n/a** | n/a** | n/a** | 109 |
| NX00328 | n1a** | n/a** | n/a** | 114. |
| LD166BA | n/a** | n/a** | n/a** | 110 |

| **znLLDPE** | | | | |
|---|---|---|---|---|
| Dowlex 2045G | 10.9 | 12.3 | 1.4 | 122 |
| ExxonMobil LL1001XV | n/a | n/a | n/a | 120 |

| **Low MIR mLLDPE** | | | | |
|---|---|---|---|---|
| Exceed (ECD)1018A | 10.9 | 12.5 | 1.6 | 118 |

| **High MIR mLLDPE** | | | | |
|---|---|---|---|---|
| Enable 20-05 (EXP502) | 11 | 23.6 | 12.6 | 117 |
| Enable 20-10 (EXP500) | 11.8 | 19.9 | 8.1 | 117 |
| Enable 27-05 (EXP501) | 14.4 | 27.2 | 12.8 | 118 |
| Enable 27-03 *(EXP505) | 16.6 | 37.8 | 21.2 | 118 |
| Dow Elite 5400G | 9.5 | 15.6 | 6.1 | 119 |

| **ExxonMobil HDPE** | | | | |
|---|---|---|---|---|
| HTA108 | n/a | n/a | n/a | 132 |

| | | | | |
|---|---|---|---|---|
| ** It was not possible to extrude a reference film under the conditions shown in Table 3. | | | | |

The polymer according to the invention marked * shows a distinctly higher ΔMD reflecting a significant increase in the stress levels needed to reach a secondary plateau after the 10% offset yield point and a first plateau has been reached.

### Example films

Films were made using polymers in Table 1 as detailed in Table 3 below.

**Table 3**

| **Blown film line configuration:** | | |
|---|---|---|
| Manufacturer and machine model | Alpine Monoextruder HS75S25D | Windmöller & Hölscher (W&H) with Varex E90L30 and E60L30 extruders for the core and skin layers |
| Type | Monolayer | 3 Layer Coextrusion |
| Die Diameter | 200 mm | 250 mm |
| Die Gap | 2.5 mm | 1.4 mm |
| Extruder Diameter | 75 mm | 60mm/90mm/60mm |
| Extruder Length | 24 L/D | 30 L/D |
| | | |

| **Blown Film Line Standard Conditions (1 MI LLDPE)** | | |
|---|---|---|
| Temp Settings Extruder | 180 °C | 190 / 200 / 190 °C |
| Temp Settings Die opening | 200 °C | 200 °C |
| Output | 120 Kg/H | 200 Kg/H |
| BUR | 2.5 | 2.5 |
| Frost Line Height | 600 mm | 800 mm |

Alpine monolayer films are extruded so as to provide films of 25 µm unless otherwise mentioned. All coextruded films produced on the W&H machine have layer distribution of 12.5 µm/25 µm/12.5 µm. The Alpine machine is adapted for the extrusion of low MIR LLDPE type polymers, not benefiting from shear thinning, and is widely available. A reference film as referred to in the description and claims is produced using an Alpine Monoextruder HS75S25D under the conditions specified in Table 1.

Individual films were made under the conditions shown above and further detailed in Tables 4 and 5. Both mechanical and optical properties are indicated.

**Table 4**

| Run | Die gap mm | V0 m/min | Vf m/min | Average strain rate (s⁻¹) | LD % | Core | Other type PO in core | LLDPE type in skin | LLDPE % | ΔD¹) | Layer split | Thickness (µm) | Haze | Dart | Elmendorf MD | ElmendorfTD |
|---|---|---|---|---|---|---|---|---|---|---|---|---|---|---|---|---|
| 1 | 1.4 | 4.8 | 44 | 0.82 | 0 | 1018CA | NO | 1018CA | 100 | 0.000 | 1-2-1 | 50 | 20.3 | No Break | 12 | 15 |
| 2 | 1.4 | 4.8 | 44 | 0.82 | 20 | LD165BW1 | 1018CA | 1018CA | 100 | 0.001 | 1-2-1 | 50 | 5.8 | 12.50 | 12 | 22 |
| 3 | 1.4 | 4.8 | 44 | 0.82 | 20 | NX00328 | 1018CA | 1018CA | 100 | 0.002 | 1-2-1 | 50 | 5.9 | 9.67 | 12 | 23 |
| 4 | 1.4 | 4.0 | 73.8 | 1.46 | 0 | EXP502 | NO | 1018CA | 100 | 0.002 | 1-2-1 | 25 | 16.5 | 28 | 9 | 20 |
| 5 | 1.4 | 4.0 | 73.8 | 1.46 | 10 | EXP502 | LD 166BA | 1018CA | 100 | 0.002 | 1-2-1 | 25 | 3.2 | 25 | 7 | 18 |
| 6 | 1.4 | 4.0 | 61.5 | 0.69 | 0 | EXP500 | NO | 1018CA | 100 | 0.002 | 1-2-1 | 50 | 18 | No Break | 11.3 | 19.4 |
| 7 | 1.4 | 4.0 | 61.5 | 0.69 | 0 | EXP500 | NO | EXP500 | 100 | 0 | 1-2-1 | 50 | 14 | 16.3 | 8.6 | 18.2 |

| | | | | | | | | | | | | | | | | |
|---|---|---|---|---|---|---|---|---|---|---|---|---|---|---|---|---|
| ¹⁾ ΔD represents the difference in density between the core and skin. | | | | | | | | | | | | | | | | |

Run 1 is comparative example. It illustrates the properties of a film with three identical layers of non-branched linear mLLDPE 1018CA extruded under a moderate strain or deformation rate. This results in a high haze and a high Dart. Run 2 is a comparative example corresponding to Run 60 in WO2007/141036. This illustrates the properties of a multilayer film coextruded under moderate strain using an LDPE with a low MI in the core. This results in low haze but the dart impact strength is low even though the same Exceed is used in the skin layer as in Run 1. Run 3 is a comparative example of a multilayer film with a low LDPE in the core produced at a moderate strain rate giving a low haze but a low dart also similar to Run 2, that is to say low. Run 4 is a comparative example of a multilayer coextruded film using a homogeneously branched LLDPE of 0.5 MI which has a high dart but a poor haze. This example can be contrasted with other runs where an even lower MI is used and very different results are obtained. Run 5 is a comparative example corresponding to Run 102 in WO2007/141036 of a multilayer coextruded film produced under high strain conditions using a core of a homogeneously branched LLDPE of 0.5 MI in combination with a low MI LD166. The film properties benefit from the effect described in WO2007141036. However, when compared to the film of run 11 which has the same strain rate, the mechanical properties and specifically the Dart impact are lower for run 5 indicating that even using the lowest possible amount of LDPE that shows a positive outcome in WO2007141036, the mechanical properties of a film containing LDPE suffer as compared to film only including mPE structure such as the film of run 11. Run 6 is a comparative example showing a multilayer film coextruded using a homogeneously branched LLDPE of 1 MI with a 0.920 density under moderate strain rate conditions giving a poor haze and high Dart. Run 7 is a comparative example illustrating the properties of a monolayer film of a homogeneously branched LLDPE of 1 MI with a 0.920 density which has a poor haze and good Dart similar to the films described in WO2004022646.

**Table 5**

| Run | Die gap mm | V0 mlmin | Vf m/min | Average strain rate (s⁻¹) | Enable % | Core | Other type PO in core | LLDPE type in skin | LLDPE % | ΔD | Layer split | Thickness (µm) | Haze | Dart | Elmendorf MD | Elmendorf TD |
|---|---|---|---|---|---|---|---|---|---|---|---|---|---|---|---|---|
| 8 | 1.4 | 4.0 | 74 | 0.78 | 100 | 20-10 | NO | 1018CA | 100 | 0.002 | 1/2/1 | 25 | 25.4 | No Break | 10.2 | 21.4 |
| 9 | 1.4 | 4.0 | 74 | 0.78 | 100 | 27-05 | NO | 1018CA | 100 | 0.009 | 1/2/1 | 25 | 3.2 | 13.4 | 8.3 | 21.7 |
| 10 | 1.4 | 4.0 | 74 | 0.78 | 80 | 27-05 | LD165BW1 | 1018CA | 100 | 0.008 | 1/2/1 | 25 | 3.0 | 9.8 | 6.3 | 27.9 |
| 11 | 1.4 | 4.0 | 123 | 1.46 | 20 | 27-03 | 1018CA | 1018CA | 100 | 0.001 | 1/2/1 | 25 | 1.88 | 61.62 | 8.6 | 16.17 |
| 12 | 1.4 | 4.0 | 61.5 | 0.69 | 20 | 27-03 | 1018CA | 1018CA | 100 | 0.001 | 1/2/1 | 50 | 4.56 | No Break | 10.27 | 15.87 |
| 13 | 1.4 | 4.0 | 31.7 | 0.31 | 20 | 27-03 | 1018CA | 1018CA | 100 | 0.001 | 1/2/1 | 97 | 11.9 | No Break | 11.31 | 14.88 |
| 14 | 1.4 | 4.0 | 73.8 | 1.46 | 20 | 27-03 | 1018CA | EXP500 | 100 | 0.001 | 1/2/1 | 25 | 6.17 | | 7.99 | 17.85 |
| 15 | 1.4 | 4.0 | 36.9 | 0.69 | 20 | 27-03 | 1018CA | EXP500 | 100 | 0.001 | 1/2/1 | 50 | 5.6 | | 9.49 | 15.85 |
| 16 | 1 | 4.2 | 28 | 0.65 | 100 | 27-03 | NO | NO | | | Mono | 50 | 11.7 | 6.8 | 2.3 | 13.5 |
| 17 | 2.5 | 1.7 | 28 | 0.72 | 100 | 27-03 | NO | NO | | | Mono | 50 | 16.3 | 5.6 | 1.5 | 17 |

Example 8 is a comparative example showing that even if a high strain rate is applied, a poor haze results even if the Dart is acceptable. Example 9 and example 10 are comparative examples showing that a low haze can be achieved using a 0.5 MI homogeneously branched LLDPE at moderate strain rates by maintaining a density differential as described in US6368545. However the need to select materials by reference to density limits the range of films that can be produced by varying the polymer composition of the core and skin.

Examples 11 to 15 are according to the invention. A homogeneously branched LLDPE is used in the core layer having properties in accordance with the invention. The homogeneously branched LLDPE may be blended with non-branched metallocene LLDPE. Example 13 shows that low strain rates are preferably avoided. Haze varies in the range of 1.88 to 6.17 for moderate to high strain rates. At the same time the dart impact strength can achieve the "no break conditions". Example 14 and 15 together show that the relationship between strain rate and optical properties does not apply where the skin contains a linear polyethylene polymers that have a high MIR due to the presence of long chain branches.

Example 16 and 17 are comparative examples showing true monolayer films made on Alpine line with poor haze and moderate impact strength.

These examples show that a wide variety of films may be produced at flexible rates of extrusion that incorporate high amount of linear polyethylenes and do not rely on the presence of heterogeneously branched HPPE's to lift clarity and processability.

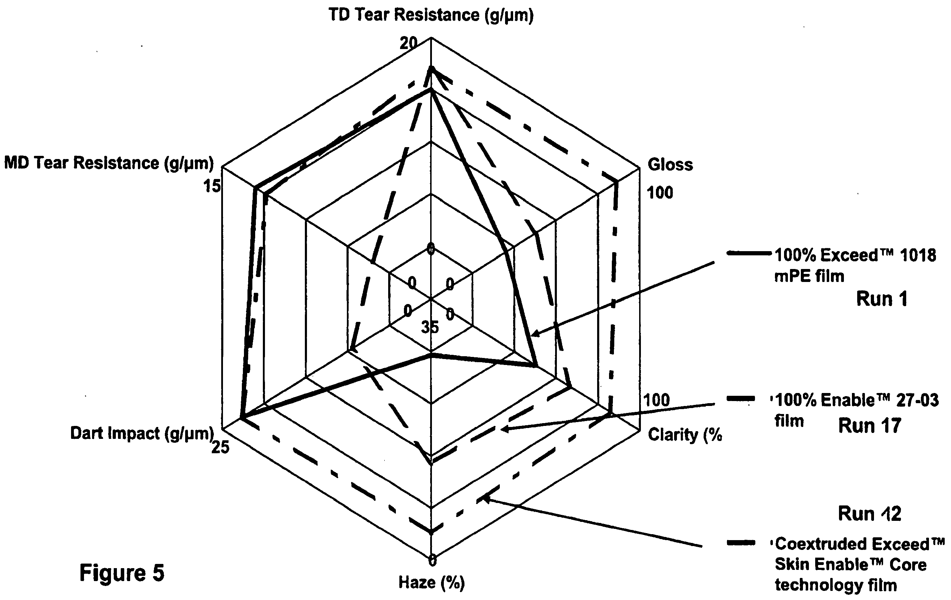

With reference to Figures 5 and 6 these illustrate data from runs in the Table 4 and 5 to emphasize that the invention permits a good combination of optical and mechanical properties.

## Claims

1. A linear low density polyethylene having a density of 0.91 to 0.94 g/cm³ determined according to ASTM D4703/D1505, an I_{2.16} (MI) of from 0.05 to 1 g/10 min, and I_{21.6} / I_{2.16} (MIR) of more than 35, the MI and MIR being determined according to ASTM 1238 D at 190 °C, and a difference between the MD Tensile force based on ASTM D882-02 at 100% elongation and MD 10 % offset yield of a reference film as defined herein having a thickness of 25 µm of at least 15MPa.

2. The polyethylene according to claim 1, in which a difference between the MD Tensile force at 100% elongation and 10 % off set yield of a reference film as defined herein having a thickness of 25 µm is at least 18MPa.

3. The polyethylene according to claim 1 or claim 2, in which the I_{21.6} / I_{2.16} (MIR) is from 40 to 70 and the Mw/Mn as described herein from 2.5 to 4.

4. The polyethylene according to any of the preceding claims, in which the MD 10 % offset yield is at least 14 MPa.

5. The polyethylene according to any of the preceding claims, in which the density (p) and MI conform to the inequality p > 0.04MI+0.91.

6. The polyethylene according to any of the preceding claims, in which the MI is from 0.1 to 0.35 g/10 min; the density is from 0.92 to 0.935 g/cm³; the Mw/Mn is from 3 to 4.

7. The polyethylene according to any of the preceding claims, in which the T₇₅-T₂₅ as described herein determined by TREF is from 2 to 8 °C.

8. The polyethylene according to any of the preceding claims in which the polyethylene contains short chain branches derived from 1-hexene and/or 1-octene.

9. A coextruded film having:
a) a core layer comprising at least 10 wt% of a linear low density polyethylene according to any of the preceding claims 1 to 9 and no or less than 30, preferably less than 15 wt% of an HPPE, said wt % being calculated on the total polymer wt % in the core layer; and
b) skin layer(s) on at least one side of the core layer comprising (i) at least 85 wt% of a linear polyethylene based on the total weight of polymer in the skin layer of which at least 75 wt% based on the total weight of linear polyethylene in the skin layer is an LLDPE with an MI of 2.5 g/10 min or less and an MIR of less than 35 and no or less than 15 wt% based on the total weight of polymer in the skin layer of an HPPE.

10. The film according to claim 9, in which the linear polyethylene having an MIR of less than 35 in the skin layer has a difference between the MD Tensile force based on ASTM D882-02 at 100% elongation and MD 10 % Offset yield of a reference film as defined herein having a thickness of 25 µm of less than 7 MPa.

11. The film according to claim 9 or claim 10, in which the skin layer comprises at least 40 wt% a linear polyethylene having a density of 0.88 to 0.94 g/cm³ and an Mw/Mn of from 1.8 to 4 and no or less than 5wt% of HPPE, said wt % being calculated on the total polymer wt in the skin layer.

12. A laminate having a film according to any of the preceding claims 9 to 11, with a thickness from 30-150 µm, a skin layer composition consisting substantially of a linear polyethylene, including VLDPE and/or LLDPE, preferably a mLLDPE, with a density of less than 0.920 g/cm³ and a core layer consisting substantially of a linear low density polyethylene according to any of the preceding claims 1 to 8 providing an adhesive layer connecting adjacent outer layers of the laminate.

13. The use of a linear polyethylene according to any of the preceding claims 1 to 8, in blown film coextrusion to obtain a Haze of less than 10% preferably less than 5% as determined based on ASTM D-1003 and a Dart impact resistance following ASTM D-1709-04 of at least 5, preferably 10 g/µm.

## Patentansprüche

1. Lineare Polyethylen niedere Dichte mit einer gemäß ASTM D4703/D1505 bestimmten Dichte von 0,91 bis 0,94 g/cm³, einem I_{2,16} (MI) von 0,05 bis 1 g/10 Min., und einem I_{21,6}/1I_{2,16} (MIR) von mehr als 35, wobei der MI und das MIR gemäß ASTM 1238 D bei 190°C bestimmt werden, und einer Differenz zwischen der MD Zugkraft basierend auf ASTM D882-02 bei 100% Dehnung und der MD 10% Streckgrenze einer Referenzfolie, wie hierin definiert mit einer Dicke von 25 µm, von mindestens 15 MPa.

2. Polyethylen nach Anspruch 1, bei dem eine Differenz zwischen der MD Zugkraft bei 100% Dehnung und der 10% Streckgrenze einer Referenzfolie, wie hierin definiert mit einer Dicke von 25 µm, mindestens 18 MPa beträgt.

3. Polyethylen nach Anspruch 1 oder Anspruch 2, bei dem das I_{21.6}/I_{21.6} (MIR) 40 bis 70 beträgt und das Mw/Mn, wie hierin beschrieben, 2,5 bis 4 beträgt.

4. Polyethylen nach einem der vorhergehenden Ansprüche, bei dem die MD 10% Streckgrenze mindestens 14 MPa beträgt.

5. Polyethylen nach einem der vorhergehenden Ansprüche, bei dem die Dichte (p) und der MI die Ungleichung ρ> 0,04MI+0,91 erfüllen.

6. Polyethylen nach einem der vorhergehenden Ansprüche, bei dem der MI 0,1 bis 0,35 g/10 Min. beträgt, die Dichte 0,92 bis 0,935 g/cm³ berägt; das Mw/Mn 3 bis 4 beträgt.

7. Polyethylen nach einem der vorhergehenden Ansprüche, bei dem die hierin durch TREF bestimmte T₇₅-T₂₅, 2 bis 8 ° C beträgt.

8. Polyethylen nach einem der vorhergehenden Ansprüche, bei dem das Polyethylen kurzkettige Zweige enthält, die sich von 1-Hexen und/oder 1-Octen ableiten.

9. Coextrudierte Folie mit
a) einer Kernschicht, die mindestens 10 Gew.-% lineares Polyethylen niederer Dichte gemäß einem der vorhergehenden Ansprüche 1 bis 9 und kein oder weniger als 30, vorzugsweise weniger als 15 Gew.-% HPPE enthält, wobei die Gew.-% auf die Gesamtpolymer-Gew.-% in der Kernschicht berechnet sind und
b) Hautschicht(en) auf mindestens einer Seite der Kernschicht, die (i) mindestens 85 Gew.-% lineares Polyethylen, bezogen auf das Gesamtgewicht an Polymer in der Hautschicht, wovon mindestens 75 Gew.-%, bezogen auf das Gesamtgewicht von linearem Polymer in der Hautschicht, LLDPE mit einem MI von 2,5 g/10 Min. oder weniger und einem MIR von weniger als 35 ist, und kein oder weniger als 15 Gew.%, bezogen auf das Gesamtgewicht von Polymer in der Hautschicht, an HPPE umfasst.

10. Folie nach Anspruch 9, bei der das lineare Polyethylen mit einem MIR von weniger als 35 in der Hautschicht eine Differenz zwischen der MD Zugkraft, basierend auf ASTM D882-02 bei 100% Dehnung, und der MD 10 Streckgrenze einer hierin definierten Referenzfolie mit einer Dicke von 25 µm, von weniger als 7 MPa aufweist.

11. Folie nach Anspruch 9, oder Anspruch 10, bei der die Hautschicht mindestens 40% lineares Polyethylen mit einer Dichte von 0,88 bis 0,94 g/cm³ und einem Mw/Mn von 1,8 bis 4 und kein oder weniger als 5 Gew.-% HPPE umfasst, wobei die Gew.-% auf das Gesamtpolymergewicht in der Hautschicht berechnet sind.

12. Laminat mit einer Folie gemäß einem der vorhergehenden Ansprüche 9 bis 11 mit einer Dicke von 30 bis 150 µm, einer Hautschichtzusammensetzung, die im Wesentlichen aus linearem Polyethylen, einschließlich VLDPE und/oder LLDPE, vorzugsweise mLLDPE, mit einer Dichte von weniger als 0,920 g/cm³ besteht, und einer Kernschicht, die im Wesentlichen aus linearem Polyethylen niederer Dichte gemäß einem der vorhergehenden Ansprüche 1 bis 8 besteht, die eine Klebeschicht liefert, die benachbarte Außenschichten des Laminats verbindet.

13. Verwendung von linearem Polyethylen gemäß einem der vorhergehenden Ansprüche 1 bis 8 bei der Blasfoliencoextrusion, um eine Trübung von weniger als 10%, vorzugsweise weniger als 5%, wie bestimmt durch ASTM D-1003, und einen Pfeileinschlagwiderstand gemäß ASTM D-1709-04 von mindestens, vorzugsweise 10 g/µm zu erhalten.

## Revendications

1. Polyéthylène de basse densité linéaire ayant une densité de 0,91 à 0,94 g/cm³ déterminée selon la méthode ASTM D4703/D1505, une valeur I_{2,16} (MI (indice de fusion)) de 0,05 à 1 g/10 min, et un rapport I_{21,6}/I_{2,16} (MIR, rapport des indices de fusion) supérieur à 35, les valeurs MI et MIR étant déterminées selon la méthode ASTM 1238 D à 190 °C, et une différence entre la force de traction dans le sens machine (SM) selon la méthode ASTM D882-02 à un allongement de 100 % et une contrainte au seuil conventionnel d'écoulement à un écart de 10 % dans le SM d'un film de référence tel que défini dans le présent document ayant une épaisseur de 25 µm d'au moins 15 MPa.

2. Polyéthylène selon la revendication 1, dans lequel une différence entre la force de traction dans le SM à un allongement de 100 % et une contrainte au seuil conventionnel d'écoulement à un écart de 10 % dans le SM d'un film de référence tel que défini dans le présent document ayant une épaisseur de 25 µm est d'au moins 18 MPa.

3. Polyéthylène selon la revendication 1 ou la revendication 2, dans lequel le rapport I_{21,6}/I_{2,16} (MIR) est de 40 à 70 et le rapport entre la masse moléculaire en poids et la masse moléculaire en nombre (Mw/Mn) tel que décrit dans le présent document est de 2,5 à 4.

4. Polyéthylène selon l' une quelconque des revendications précédentes, dans lequel la contrainte au seuil conventionnel d'écoulement à un écart de 10 % dans le SM est d'au moins 14 MPa.

5. Polyéthylène selon l'une quelconque des revendications précédentes, dans lequel la densité (p) et la valeur MI sont conformes à l'inégalité p > 0,04 MI + 0,91.

6. Polyéthylène selon l'une quelconque des revendications précédentes, dans lequel la valeur MI est de 0,1 à 0,35 g/10 min ; la densité est de 0,92 à 0,935 g/cm³ ; et le rapport Mw/Mn est de 3 à 4.

7. Polyéthylène selon l'une quelconque des revendications précédentes, dans lequel la valeur T₇₅-T₂₅ telle que décrite dans le présent document, déterminée par un procédé de fractionnement par élution avec élévation de température (TREF), est de 2 à 8 °C.

8. Polyéthylène selon l'une quelconque des revendications précédentes, le polyéthylène contenant des branches à chaînes courtes dérivées de 1-hexène et/ou de 1-octène.

9. Film coextrudé comportant :
a) une couche centrale comprenant au moins 10 % en poids d'un polyéthylène de basse densité linéaire selon l'une quelconque des revendications précédentes 1 à 9, et une quantité nulle ou inférieure à 30 %, préférablement inférieure à 15 % en poids d'un HPPE, ledit pourcentage pondéral étant calculé relativement au pourcentage pondéral total de polymère dans la couche centrale ; et
b) une ou plusieurs pellicules sur au moins un côté de la couche centrale, comprenant (i) au moins 85 % en poids d'un polyéthylène linéaire relativement au poids total de polymère dans la pellicule, dont au moins 75 % en poids relativement au poids total de polyéthylène linéaire dans la pellicule est un LLDPE ayant une valeur MI de 2,5 g/10 min ou moins et une valeur MIR inférieure à 35 et une quantité nulle ou inférieure à 15 % en poids relativement au poids total de polymère dans la pellicule d'un HPPE.

10. Film selon la revendication 9, dans lequel le polyéthylène linéaire ayant une valeur MIR inférieure à 35 dans la pellicule a une différence entre la force de traction dans le SM selon la méthode ASTM D882-02 à un allongement de 100 % et une contrainte au seuil conventionnel d'écoulement à un écart de 10 % dans le SM d'un film de référence tel que défini dans le présent document ayant une épaisseur de 25 µm qui est inférieure à 7 MPa.

11. Film selon la revendication 9 ou la revendication 10, dans lequel la pellicule comprend au moins 40 % en poids d'un polyéthylène linéaire ayant une densité de 0,88 à 0,94 g/cm³, et un rapport Mw/Mn de 1,8 à 4 et une quantité nulle ou inférieure à 5 % en poids de HPPE, ledit pourcentage pondéral étant calculé relativement au poids total de polymère dans la pellicule.

12. Stratifié comportant un film selon l'une quelconque des revendications précédentes 9 à 11, ayant une épaisseur de 30 à 150 µm, une composition de pellicule constituée essentiellement d'un polyéthylène linéaire, comprenant un VLDPE et/ou un LLDPE, préférablement un mLLDPE, ayant une densité inférieure à 0,920 g/cm³, et une couche centrale constituée essentiellement d'un polyéthylène de basse densité linéaire selon l'une quelconque des revendications précédentes 1 à 8, formant une couche adhésive raccordant des couches extérieures adjacentes du stratifié.

13. Utilisation d'un polyéthylène linéaire selon l'une quelconque des revendications 1 à 8, dans un procédé de coextrusion d'un film soufflé, de façon à obtenir un trouble inférieur à 10 %, préférablement inférieur à 5 %, déterminé selon la méthode ASTM D-1003, et une résistance au choc à la torpille selon la méthode ASTM D-1709-04 d'au moins 5 g/µm, préférablement de 10 g/µm.
